# EUROPEAN PATENT SPECIFICATION

(11) **EP 1 593 306 B1**
(45) Date of publication and mention of the grant of the patent: **13.03.2013**
(21) Application number: 05252553.2
(22) Date of filing: 23.04.2005
(51) Int. Cl.: A01N 27/00

(54) **Humidity activated delivery systems for cyclopropenes**
Durch Feuchtigkeit aktivierte Verabreichungssysteme für Cyclopropene
Systèmes de libération des cyclopropènes activés par humidité

(30) Priority: 05.05.2004 US 568383 P
(43) Date of publication of application: 09.11.2005
(73) Proprietor: Rohm and Haas Company, Philadelphia, PA 19106-2399 (US)
(72) Inventor: Jacobson, Richard Martin, Chalfont Pennsylvania 18914 (US); Wehmeyer, Fiona Linette, Roslyn Pennsylvania 19001 (US)
(74) Representative: Buckley, Guy Julian

(56) References cited:
- EP-A1- 1 192 858
- EP-A2- 1 236 397

## Description

The present invention relates to new delivery systems for cyclopropenes in which compositions comprising the cyclopropene and a molecular encapsulation agent complex further comprises additional components which provide for the release of the cyclopropene from the molecular encapsulating agent using humid air. Such cyclopropenes and their derivatives, such as, for example, methylcyclopropene, are capable of inhibiting the ethylene response in plants. Cyclopropene/molecular encapsulating agent complexes provide a convenient means for storing and transporting cyclopropenes which typically are reactive gases and highly unstable. Such complexes also provide convenient methods of delivering these compounds to plants in order to extend the plant's shelf life.

It is well known that ethylene can cause the premature death of plants or plant parts including, for example, flowers, leaves, fruits, and vegetables through binding with certain receptors in the plant. Ethylene also promotes leaf yellowing and stunted growth as well as premature fruit, flower, and leaf drop. Because of these ethylene-induced problems, very active and intense research presently concerns the investigation of ways to prevent or reduce the deleterious effects of ethylene on plants. U.S. Pat. No. 5,518,988 discloses the use of cyclopropene and its derivatives, including 1-methylcyclopropene, as effective agents for blocking the effects of ethylene. However, a major problem with these compounds is that they are typically unstable gases which present explosive hazards when compressed. One solution to this problem is to incorporate the cyclopropene into a molecular encapsulation agent complex in order to stabilize its reactivity and thereby provide a convenient and safe means of storing, transporting, and applying or delivering the active compounds to plants. For the most active cyclopropene, 1-methylcyclopropene, the preferred molecular encapsulation agent is a cyclodextrin, with α-cyclodextrin being the most preferred. The application or delivery of these active compounds to plants is accomplished by simply adding water to the molecular encapsulation agent complex. The complex is prepared according to the methods disclosed in U. S. Patent No. 6,017,849 which provides the material in the form of a powder.

The 1-methylcyclopropene/α-cyclodextrin complex noted above releases the 1-methylcyclopropene very quickly when the powder is added to water. However, in order to accomplish this release large amounts of water are required, at least ten times and preferably twenty times the weight of the 1-methylcyclopropene/α-cyclodextrin complex. Sparging with a gas, such as, for example air or nitrogen, is also beneficial to the release. It would be advantageous to accomplish complete release of the cyclopropene from the complex using no additional water and no gas sparging. This would allow a user to treat flowers, fruits, or vegetables with the cyclopropene gas directly in shipping containers, rather than in a large treatment container, chamber, or room. U. S. Patent No. 6,426,319 discloses delivery systems for cyclopropenes from α-cyclodextrin complexes that require less water. This is accomplished by mixing the complex with a water absorbent material such as, for example, one or more organic materials such as superabsorbent polymers, such as, for example, sodium polyacrylate (crosslinked), polysaccharides, acrylamide/acrylate copolymers, and carboxymethylcellulose; one or more inorganic deliquescent compounds such as, for example, calcium chloride, magnesium chloride, lithium chloride, zinc chloride, magnesium nitrate, and aluminum nitrate; and combinations and mixtures thereof.

We have surprisingly found that a certain limited number of materials are particularly effective in causing the release of cyclopropenes from the α-cyclodextrin complex utilizing only small amounts of water extracted from humid air.

The present invention, in its various aspects, is as set out in the accompanying claims.

According to a first aspect, the present invention is, therefore, a composition comprising:
a) a molecular encapsulation agent within which is encapsulated one or more cyclopropenes of the formula: 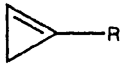 wherein R is hydrogen or a substituted or unsubstituted alkyl, alkenyl, alkynyl, cycloalkyl, cycloalkylalkyl, phenyl, or naphthyl group; wherein the substituents, when present, are independently halogen, alkoxy, or substituted or unsubstituted phenoxy;
b) one or more hygroscopic or deliquescent materials selected from one or more polyethers, one or more polyols selected from the group consisting of glycerol, erythritol, xylitol, mannitol, maltitol and sorbitol, or mixtures thereof;
c) optionally, one or more substrates; and
d) optionally, one or more adjuvants;

As used herein, all percentages are percent by weight and all parts are parts by weight, unless otherwise specified, and are inclusive and combinable. All ratios are by weight and all ratio ranges are inclusive and combinable. All molar ranges are inclusive and combinable.

As used herein, the term "alkyl" means both straight and branched chain (C₁-C₂₀) radicals which include, for example, methyl, ethyl, n-propyl, isopropyl, 1-ethylpropyl, n-butyl, tert-butyl, isobutyl, 2,2-dimethylpropyl, pentyl, octyl, and decyl. The terms "alkenyl" and "alkynyl" mean (C₃-C₂₀)alkenyl and (C₃-C₂₀)alkynyl groups such as, for example, 2-propenyl, 2-butenyl, 3-butenyl, 2-methyl-2-propenyl, and 2-propynyl. The term "cycloalkylalkyl" means a (C₁-C₁₅) alkyl group substituted with a (C₃-C₇) cycloalkyl group such as, for example cyclopropylmethyl, cyclopropylethyl, cyclobutylmethyl, and cyclopentylethyl. The term "haloalkyl" means an alkyl radical wherein one or more of the hydrogen atoms have been replaced by a halogen atom. The term "halogen" means fluorine, chlorine, bromine, and iodine.

In one embodiment of the invention R is (C₁-C₁₀) alkyl. In a preferred embodiment, R is (C₁-C₈) alkyl. In a more preferred embodiment R is (C₁-C₄) alkyl. Most preferably, R is methyl.

For purposes of this invention, the term "complex" means a molecular encapsulation agent within which is encapsulated a cyclopropene. Useful encapsulating agents include substituted or unsubstituted cyclodextrins, crown ethers, and zeolites. In a preferred embodiment of the invention the encapsulating agent is α-cyclodextrin, β-cyclodextrin, or γ -cyclodextrin. In another preferred embodiment of the invention, particularly when the cyclopropene is 1-methylcyclopropene, the encapsulating agent is α-cyclodextrin. The preferred encapsulating agent will vary depending upon the size of the R group. However, as one skilled in the art will appreciate, any cyclodextrin or mixture of cyclodextrins, cyclodextrin polymers, modified cyclodextrins, or mixtures thereof can also be utilized pursuant to the present invention. Cyclodextrins are available from Wacker Biochem Inc., Adrian, MI or Cerestar USA, Hammond, IN, as well as other vendors.

The cyclopropenes applicable to this invention are known materials prepared using the processes disclosed in U. S. Patents No. 5,518,988 and 6,017,849. The cyclopropene molecular encapsulation agent complexes of the present invention are prepared by contacting the cyclopropene with a solution or slurry of the molecular encapsulation agent and then isolating the complex, again using general processes disclosed in U. S. Patent No. 6,017,849. In the case of 1-methylcyclopropene, the gas is bubbled through a solution of α-cyclodextrin in water from which the complex first precipitates and is then isolated by filtration.

A wide variety of polyethers, polyols, or mixtures thereof may be used in the compositions ofthis invention. The polyols may be selected from glycerol, erythritol, xylitol, mannitol, maltitol, and sorbitol. The polyethers include, for example, polyethylene glycol, and polypropylene glycol, and mixtures thereof. It is often desirable to include in the composition one or more adjuvants, such as, for example, extenders, binders, plasticizers, lubricants, surfactants, wetting agents, spreading agents, dispersing agents, stickers, adhesives, defoamers, thickeners, and emulsifying agents. Such adjuvants commonly used in the art can be found in the John W. McCutcheon, Inc. publication Detergents and Emulsifiers, Annual, Allured Publishing Company, Ridgewood, New Jersey, U.S.A.

In one embodiment of the present invention complex is mixed with one or more polyethers, one or more polyols, or a mixture thereof, optionally with an adjuvant (for example, a binder such as ethyl cellulose) and then coated in a layer on a substrate such as, for example, paper or plastic film. The substrate can be any material upon which the complex can be coated and which does not react with the complex. The coating process may be by pressure or facilitated by heat or solvents. Any coating process known to those skilled in the art may be utilized to coat the powdered complex onto the substrate so long as the process does not significantly degrade the powdered complex, cause premature release of the cyclopropene, or prevent release of the cyclopropene. This coated substrate may then be used as is or placed in a protective envelope or sandwich which can be made from a variety of vapor permeable materials such as, for example, filter paper or porous plastics such as, for example, Tyvek^{™} brand protective material. When this sandwich is placed in a humid environment, such as an environment typical for the storage of flowers, fruits, and vegetables, the 1-methylcyclopropene gas is released. Although the delivery systems of this invention may provide slow release of 1-methylcyclopropene, some embodiments utilize thin coatings and offer relatively rapid release of 1-methylcyclopropene. This same process is equally applicable to other cyclopropene/molecular encapsulation agent complexes.

The term "humid environment" or "humid air" means an environment wherein the relative humidity is greater than 50%, preferable greater than 70%, and more preferably greater than 80%. In one embodiment of this invention, the release rate of cyclopropene from the molecular encapsulation agent at 50% relative humidity in both the presence and absence of the hygroscopic or deliquescent material is similar but at 80% relative humidity the release rate of the cyclopropene from the molecular encapsulation agent in the presence of the hygroscopic or deliquescent material is more rapid than in the absence of the hygroscopic or deliquescent material. The term "similar" means within 20%; the term "more rapid" means at a rate more than 20% greater.

The combinations described above can be placed in envelopes or sandwiches of various compositions or included in multilayer film systems. In one embodiment, a sandwich is constructed of a top and bottom layer, at least one of which is vapor permeable. The sandwich may be stored in a water vapor impermeable container until just prior to use. Alternatively, the coated substrate itself may be placed in a water vapor impermeable container until just prior to use. Such containers include, for example, vials, sealed foil pouches, sealed plastic or polymer pouches, polymer microspheres, multilayer films, and monolithic polymer structures.

The compositions of this invention may comprise from 0.01 percent to 99 percent, by weight, of the complex, 1 percent to 99.99 percent, by weight, of the hygroscopic or deliquescent material, 0 percent to 99 percent, by weight, substrate, and 0 percent to 99 percent, by weight, of one or more adjuvants. In one embodiment, the compositions of this invention comprise:

| | |
|---|---|
| 1-methylcyclopropene/α-cyclodextrin complex | 0.01-95% |
| Hygroscopic or deliquescent material | 5-95% |
| Substrate | 0-94.99% |
| Adjuvant | 0-50% |

In another embodiment, the compositions of this invention comprise:

| | |
|---|---|
| 1-methylcyclopropene/α-cyclodextrin complex | 0.1-25% |
| Hygroscopic or deliquescent material | 5-75% |
| Substrate | 20-93% |
| Adjuvant | 0-50% |

In still another embodiment, the compositions of this invention comprise:

| | |
|---|---|
| 1-methylcyclopropene/α-cyclodextrin complex | 0.5-5% |
| Hygroscopic or deliquescent material | 5-25% |
| Substrate | 30-90% |
| Adjuvant | 0-20% |

These ratios will change for different cyclopropenes, different encapsulation agents, and hygroscopic or deliquescent materials due to differences in molecular weights, cyclopropene uptake by the encapsulation agents, and water absorbing ability of the hygroscopic or deliquescent material. One skilled in the art can easily determine the optimum ratios for these various combinations.

Another embodiment of this invention is a method to deliver a cyclopropene compound to a plant to inhibit an ethylene response in the plant comprising the step of contacting the composition of this invention with water in the presence of the plant.

Some embodiments of this invention are illustrated by the following examples.

In the following examples, the 1-methylcyclpropene/ α-cyclodextrin complex was prepared according to the methods of U.S. Patent No. 6,017,849.

### EXAMPLE 1 - 1-Methylcyclopropene release in a humid environment

A mixture of:
0.31 g of 1-methylcyclopropene/α-cyclodextrin complex
0.33 g of sorbitol
0.47 g of acetyl tributyl citrate
1.40 g of ethylcellulose and
7.50 g of acetone was coated on paper.
The acetone was evaporated and the resulting coating was determined (by weighing) to be 26 g per square meter ("m²"). Exposure of this coated paper to 100% relative humidity in a sealed glass container gave over 90% of the expected release of the 1-methylcyclopropene within 4 hours.

### EXAMPLE 2 - 1-Methylcyclopropene release in a humid environment

A mixture of:
0.29 g of 1-methylcyclopropene/α-cyclodextrin complex
0.97 g of polyethylene glycol
0.97 g of ethyl cellulose and
7.70 g of acetone was coated on paper.
The acetone was evaporated and the resulting coating was determined (by weighing) to be 22 g per m². Exposure of this coated paper to 100% relative humidity in a sealed glass container gave over 90% of the expected release of the 1-methylcyclopropene within 4 hours.

### EXAMPLE 3 - 1-Methylcyclopropene release in a humid environment

A mixture of:
2.5 g of 1-methylcyclopropene/α-cyclodextrin complex and
97.5 g of polyethylene glycol was coated on paper.
The coating was determined (by weighing) to be 25 g per m². This coated paper was sandwiched between adhesive coated polypropylene and Tyvek™ protective material. Exposure of this sandwich to 91 % relative humidity in a sealed glass container gave over 90% of the expected release of the 1-methylcyclopropene within 2 hours.

### EXAMPLE 4 - 1-Methylcyclopropene release by humidity

A mixture of:
2.5 g of 1-methylcyclopropene / α-cyclodextrin complex and
97.5 g of polyethylene glycol was coated on paper.
The coating was determined (by weighing) to be 25 g per m². This coated paper was placed in a paper envelope. Exposure of this envelope to 100% relative humidity in a sealed glass container gave over 90% of the expected release of the 1-methylcyclopropene within 2 hours.

### EXAMPLE 5 - 1-Methylcyclopropene release by humidity

A mixture of:
2.5 g of 1-methylcyclopropene / α-cyclodextrin complex and
97.5 g of polyethylene glycol was coated on paper.
The coating was determined (by weighing) to be 25 g per m². This coated paper was sandwiched between sheets of filter paper. Exposure of this sandwich to 100% relative humidity in a sealed glass container gave over 90% of the expected release of the 1-methylcyclopropene within 2 hours.

### EXAMPLE 6 - 1-Methylcyclopropene release by humidity

A mixture of:
2.5 g of 1-methylcyclopropene / α-cyclodextrin complex and
97.5 g of polyethylene glycol was coated on paper.
The coating was determined (by weighing) to be 25 g per m². This coated paper was sandwiched between sheets of Tyvek™ protective material. Exposure of this sandwich to 100% relative humidity in a sealed glass container gave over 90% of the expected release of the 1-methylcyclopropene within 2 hours.

### EXAMPLE A (Comparative) - 1-Methylcyclopropene release by humidity

A mixture of:
2.5 g of 1-methylcyclopropene/α-cyclodextrin complex
5 g of calcium chloride
92.5 g of lactose was tabletted into approximately 0.275 g flat faced wafers 0.50 inches in diameter using a press pressure of 1800 pounds. Exposure of this tablet to 90% relative humidity in a sealed glass container gave a maximum of only 42 to 45% of the expected release of the 1-methylcyclopropene within 6 to 7 hours.

### EXAMPLE B (Comparative)-1-Methylcyclopropene release by humidity

A mixture of:
2.5 g of 1-methylcyclopropene / α-cyclodextrin complex
5 g of calcium chloride
92.5 g of lactose was tabletted into approximately 0.275 g flat faced wafers 0.50 inches in diameter using a press pressure of 1800 pounds. Exposure of this tablet to 100% relative humidity in a sealed glass container gave a maximum of only 52 to 58% of the expected release of the 1-methylcyclopropene within 6 to 7 hours.

## Claims

1. A composition comprising:
a) a molecular encapsulation agent within which is encapsulated one or more cyclopropenes of the formula: 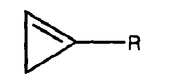 wherein R is hydrogen or a substituted or unsubstituted alkyl, alkenyl, alkynyl, cycloalkyl, cycloalkylalkyl, phenyl, or naphthyl group; wherein the substituents, when present, are independently halogen, alkoxy, or substituted or unsubstituted phenoxy; and,
b) one or more hygroscopic or deliquescent materials selected from one or more polyethers, one or more polyols selected from the group consisting of glycerol, erythritol, xylitol, mannitol, maltitol and sorbitol, or mixtures thereof.

2. The composition of claim 1, wherein R is (C₁-C₈)alkyl.

3. The composition of claim 1, wherein R is methyl.

4. The composition of claim 1, wherein the molecular encapsulation agent is a cyclodextrin or a mixture of cyclodextrins.

5. The composition of claim 1, wherein the molecular encapsulation agent is α-cyclodextrin.

6. The composition of claim 1 further comprising:
a) one or more substrates; or
b) one or more adjuvants; or
c) one or more substrates and one or more adjuvants.

7. An article of manufacture comprising the composition of claim 1 enclosed in a water impermeable container.

8. A method to release a cyclopropene from the composition of claim 1, comprising the step of contacting the composition with humid air.

9. A method to deliver a cyclopropene compound to a plant to inhibit an ethylene response in the plant, comprising the step of contacting the composition of claim 1 with humid air in the presence of the plant.

## Patentansprüche

1. Eine Zusammensetzung, die Folgendes beinhaltet:
a) ein molekulares Einkapselungsmittel, in dem ein oder mehrere Cyclopropene der folgenden Formel eingekapselt sind: 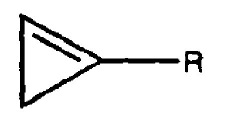 wobei R Wasserstoff oder eine substituierte oder nicht substituierte Alkyl-, Alkenyl-, Alkynyl-, Cycloalkyl-, Cycloalkylalkyl-, Phenyl- oder Naphthylgruppe ist; wobei die Substituenten, wenn vorhanden, unabhängig Halogen, Alkoxy oder substituiertes oder nicht substituiertes Phenoxy sind; und
b) ein oder mehrere hygroskopische oder zerfließliche Materialien, ausgewählt aus einem oder mehreren Polyethern, ein oder mehrere Polyole, ausgewählt aus der Gruppe, bestehend aus Glycerol, Erythritol, Xylitol, Mannitol, Maltitol und Sorbitol, oder Mischungen davon.

2. Zusammensetzung gemäß Anspruch 1, wobei R (C₁-C₈)Alkyl ist.

3. Zusammensetzung gemäß Anspruch 1, wobei R Methyl ist.

4. Zusammensetzung gemäß Anspruch 1, wobei das molekulare Einkapselungsmittel ein Cyclodextrin oder eine Mischung von Cyclodextrinen ist.

5. Zusammensetzung gemäß Anspruch 1, wobei das molekulare Einkapselungsmittel ein α-Cyclodextrin ist.

6. Zusammensetzung gemäß Anspruch 1, weiter Folgendes beinhaltend:
a) ein oder mehrere Substrate; oder
b) ein oder mehrere Adjuvanzien; oder
c) ein oder mehrere Substrate und ein oder mehrere Adjuvanzien.

7. Ein Herstellungsgegenstand der die Zusammensetzung gemäß Anspruch 1 beinhaltet, die in einem wasserundurchlässigen Behälter eingeschlossen ist.

8. Ein Verfahren zum Freisetzen eines Cyclopropens aus der Zusammensetzung gemäß Anspruch 1, das den Schritt des Inkontaktbringens der Zusammensetzung mit feuchter Luft beinhaltet.

9. Ein Verfahren zum Verabreichen einer Cyclopropenverbindung an eine Pflanze zum Hemmen einer Ethylenreaktion in der Pflanze, das den Schritt des Inkontaktbringens der Zusammensetzung gemäß Anspruch 1 mit feuchter Luft in der Gegenwart der Pflanze beinhaltet.

## Revendications

1. Une composition comprenant :
a) un agent d'encapsulation moléculaire au sein duquel sont encapsulés un ou plusieurs cyclopropènes de la formule : 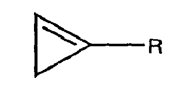 dans laquelle R est l'hydrogène ou un groupe alkyle, alcényle, alcynyle, cycloalkyle, cycloalkylalkyle, phényle, ou naphtyle substitué ou non substitué ; dans laquelle les substituants, lorsqu'ils sont présents, sont indépendamment l'halogène, l'alcoxy, ou le phénoxy substitué ou non substitué ; et
b) un ou plusieurs matériaux hygroscopiques ou déliquescents choisis parmi un ou plusieurs polyéthers, un ou plusieurs polyols choisis dans le groupe constitué du glycérol, de l'érythritol, du xylitol, du mannitol, du maltitol et du sorbitol, ou des mélanges de ceux-ci.

2. La composition de la revendication 1, dans laquelle R est l'alkyle(C₁-C₈).

3. La composition de la revendication 1, dans laquelle R est le méthyle.

4. La composition de la revendication 1, dans laquelle l'agent d'encapsulation moléculaire est une cyclodextrine ou un mélange de cyclodextrines.

5. La composition de la revendication 1, dans laquelle l'agent d'encapsulation moléculaire est l'α-cyclodextrine.

6. La composition de la revendication 1 comprenant en sus :
a) un ou plusieurs substrats ; ou
b) un ou plusieurs adjuvants ; ou
c) un ou plusieurs substrats et un ou plusieurs adjuvants.

7. Un article de fabrication comprenant la composition de la revendication 1 enfermée dans un récipient imperméable à l'eau.

8. Une méthode de libération d'un cyclopropène à partir de la composition de la revendication 1, comprenant l'étape de mise en contact de la composition avec de l'air humide.

9. Une méthode d'administration d'un composé cyclopropène à une plante afin d'inhiber une réponse à l'éthylène chez la plante, comprenant l'étape de mise en contact de la composition de la revendication 1 avec de l'air humide en présence de la plante.
